# EUROPÄISCHE PATENTSCHRIFT

(11) **EP 2 894 193 B1**
(45) Veröffentlichungstag und Bekanntmachung des Hinweises auf die Patenterteilung: **05.10.2016**
(21) Anmeldenummer: 14150973.7
(22) Anmeldetag: 13.01.2014
(51) Int. Cl.: C08K 5/00, C08G 18/10, C08G 18/12

(54) **HOCHGEFÜLLTE POLYURETHANZUSAMMENSETZUNG**
HIGHLY DENSITY POLYURETHANE COMPOSITION
COMPOSITION POLYURÉTHANE FORTEMENT CHARGÉE

(43) Veröffentlichungstag der Anmeldung: 15.07.2015
(73) Patentinhaber: Sika Technology AG, 6340 Baar (CH)
(72) Erfinder: Real, Fabian, 8620 Wetzikon (CH); Huber, Dominik, 8404 Winterthur (CH)
(74) Vertreter: Sika Patent Attorneys

(56) Entgegenhaltungen:
- EP-A1- 1 281 740
- EP-A1- 1 873 222
- US-A1- 2011 253 277

## Beschreibung

### Technisches Gebiet

Die Erfindung betrifft feuchtigkeitshärtende Zusammensetzungen auf Polyurethanbasis mit einem sehr hohen Gehalt an Füllstoffen, welche sich als Klebstoffe, Dichtstoffe oder Beschichtungen eignen.

### Stand der Technik

Feuchtigkeitshärtende Zusammensetzungen auf Basis von Polyurethanen sind seit längerem bekannt und werden unter anderem für elastische Verklebungen oder Abdichtungen eingesetzt.

Dabei werden solche Zusammensetzungen gerne als einkomponentige Zusammensetzungen formuliert, die aus verschiedenen Gebinden (z.B. Kartuschen) direkt und ohne Zumischung weiterer benötigter Bestandteile appliziert werden können und mit Feuchtigkeit aushärten. In den meisten Fällen handelt es sich um Luftfeuchtigkeit, die mit den reaktiven Polyurethanbestandteilen der Zusammensetzungen reagieren und zu einer Vernetzung und Aushärtung der Zusammensetzung führen.

Die jeweiligen Zusammensetzungen können sich je nach Anwendungsgebiet sehr stark unterscheiden und weisen zum Teil sehr verschiedene z.B. mechanische Endeigenschaften auf, enthalten aber in den meisten Fällen mindestens ein feuchtigkeitsreaktives Polyurethanpolymer und mindestens einen Füllstoff. Der Füllstoff hat dabei verschiedene Funktionen. Zum einen beeinflusst er die mechanischen Eigenschaften der ausgehärteten Zusammensetzung, wie etwa Festigkeit, Dehnvermögen oder Härte. Zum anderen stellt der Füllstoff oft eine der kostengünstigsten Komponenten einer Zusammensetzung dar, womit höher gefüllte Zusammensetzungen meist deutlich niedrigere Herstellungskosten aufweisen als niedrig gefüllte.

Dem Einsatz von Füllstoffen in Polyurethanzusammensetzungen sind jedoch Grenzen nach oben gesetzt. Einerseits leiden die mechanischen Eigenschaften unter zu hoch gefüllten Zusammensetzungen nach der Aushärtung, was sich zum Beispiel in niedrigen Bruchdehnungen bemerkbar macht. Dadurch können solche Zusammensetzungen z.B. nicht mehr zur dehnfähigen Abdichtung von Anschlussfugen oder Bewegungsfugen verwendet werden. Andererseits wird auch oft die Verarbeitbarkeit von hochgefüllten Polyurethanzusammensetzungen negativ beeinflusst. Insbesondere muss in Kauf genommen werden, dass mit einem hohen Gehalt an Füllstoff die Zusammensetzungen extrem verdicken und nur noch mit sehr hohem Kraftaufwand z.B. aus Kartuschen appliziert werden können und im äussersten Fall eine Anwendung etwa mit Handpistolen gar nicht mehr möglich ist. Darüber hinaus kann ein zu hoher Füllstoffgehalt auch dazu führen, dass die Zusammensetzungen nicht mehr stabil sind, weil zum Beispiel im Füllstoff enthaltenes Wasser mit den Polyurethanpolymeren reagieren kann und zu einer Aushärtung bereits im Gebinde führt.

Das Dokument EP1281740 A1 offenbart Baudichtstoffe mit guter Auspressbarkeit (Absatz [0008]). Die Ausführungsbeispiele 4-5 der Tabelle 1 beschreiben die Herstellung dieser Zusammensetzungen: Es wird ein NCOterminiertes Prepolymer mit Diisodecylphthalat (DIDP) und einen hohen Anteil an Kreide zusammengemischt.

### Darstellung der Erfindung

Aufgabe der vorliegenden Erfindung ist es daher, eine hochgefüllte, bevorzugt einkomponentige, feuchtigkeitshärtende Zusammensetzung auf Basis von Polyurethanen bereitzustellen, welche im ausgehärteten Zustand über gute mechanische Eigenschaften verfügt und die keine wesentliche Beeinträchtigung der Applikationseigenschaften oder Lagerstabilität aufweist. Überraschenderweise wurde nun gefunden, dass Zusammensetzungen gemäss Anspruch 1 diese Aufgabe lösen. Diese enthalten einen Gehalt an Füllstoff von mindestens 70 Gewichtsprozent, was als ausserordentlich hoch gefüllt gilt.
Erfindungsgemässe Zusammensetzungen weisen im ausgehärteten Zustand gute mechanische Eigenschaften wie Bruchdehnung auf und lassen sich im nicht ausgehärteten Zustand überraschend leicht verarbeiten.
Weiterhin weisen erfindungsgemässe Zusammensetzungen den Vorteil auf, dass sie aufgrund des ausserordentlich hohen Füllstoffgehalts kostengünstig zugänglich sind.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung ist eine Feuchtigkeitshärtende Zusammensetzung enthaltend:
a) 5 Gew.-% bis 20 Gew.-% von mindestens einem isocyanatfunktionellen Polymer,
b) 7 Gew.-% bis 20 Gew.-% Rapsölmethylester und
c) 70 Gew.-% bis 88 Gew.-% von mindestens einem Füllstoff,
bezogen auf die Gesamtzusammensetzung.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten. Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.
Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.
Unter "Molekulargewicht" versteht man im vorliegenden Dokument die molare Masse (in Gramm pro Mol) eines Moleküls. Als "mittleres Molekulargewicht" wird das Zahlenmittel Mₙ einer oligomeren oder polymeren Mischung von Molekülen bezeichnet, welches üblicherweise mittels Gelpermeationschromatographie (GPC) gegen Polystyrol als Standard bestimmt wird. Als "Raumtemperatur" wird im vorliegenden Dokument eine Temperatur von 23 °C bezeichnet.

Als Isocyanatgruppen aufweisende Polyurethanpolymere zur Herstellung einer erfindungsgemässen Zusammensetzung eignen sich beispielsweise Polymere, welche erhältlich sind durch die Umsetzung von mindestens einem Polyol mit mindestens einem Polyisocyanat, insbesondere einem Diisocyanat. Diese Umsetzung kann dadurch erfolgen, dass das Polyol und das Polyisocyanat mit üblichen Verfahren, beispielsweise bei Temperaturen von 50°C bis 100°C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind.
Insbesondere wird der Überschuss an Polyisocyanat so gewählt, dass im resultierenden Polyurethanpolymer nach der Umsetzung aller Hydroxylgruppen des Polyols ein Gehalt an freien Isocyanatgruppen von 0.1 bis 5 Gew.-%, bevorzugt 0.1 bis 2.5 Gew.-%, besonders bevorzugt 0.2 bis 1 Gew.-%, bezogen auf das gesamte Polymer, verbleibt.
Gegebenenfalls kann das Polyurethanpolymer unter Mitverwendung von Weichmachern hergestellt werden, wobei die verwendeten Weichmacher keine gegenüber Isocyanaten reaktive Gruppen enthalten.
Bevorzugt sind Polyurethanpolymere mit dem genannten Gehalt an freien Isocyanatgruppen, welche aus der Umsetzung von Diisocyanaten mit hochmolekularen Diolen in einem NCO:OH-Verhältnis von 1.5:1 bis 2.2:1 erhalten werden.

Geeignete Polyole für die Herstellung des Polyurethanpolymers sind insbesondere Polyetherpolyole, Polyesterpolyole und Polycarbonatpolyole sowie Mischungen dieser Polyole.

Als Polyetherpolyole, auch Polyoxyalkylenpolyole oder Oligoetherole genannt, sind insbesondere jene geeignet, welche Polymerisationsprodukte von Ethylenoxid, 1,2-Propylenoxid, 1,2- oder 2,3-Butylenoxid, Oxetan, Tetrahydrofuran oder Mischungen davon sind, gegebenenfalls polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliäquivalent Ungesättigtheit pro Gramm Polyol (mEq/g)), hergestellt beispielsweise mit Hilfe von so genannten Double Metal Cyanide Komplex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.
Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 20'000 g/mol.

Ebenfalls besonders geeignet sind so genannte Ethylenoxid-terminierte ("EOendcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.
Weiterhin geeignet sind Hydroxylgruppen terminierte Polybutadienpolyole, wie beispielsweise solche, die durch Polymerisation von 1,3-Butadien und Allylalkohol oder durch Oxidation von Polybutadien hergestellt werden, sowie deren Hydrierungsprodukte.
Weiterhin geeignet sind Styrol-Acrylnitril gepfropfte Polyetherpolyole, wie sie beispielsweise unter dem Handelsnamen Lupranol^{®} kommerziell erhältlich sind von der Firma Elastogran GmbH, Deutschland.

Als Polyesterpolyole sind insbesondere Polyester geeignet, welche mindestens zwei Hydroxylgruppen tragen und nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen, hergestellt werden.
Insbesondere geeignet sind Polyesterpolyole, welche hergestellt sind aus zweibis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydriden oder Estern wie beispielsweise Bernsteinsäure, Glutarsäure, Adipinsäure, Trimethyladipinsäure, Korksäure, Azelainsäure, Sebacinsäure, Dodecandicarbonsäure, Maleinsäure, Fumarsäure, Dimerfettsäure, Phthalsäure, Phthalsäureanhydrid, Isophthalsäure, Terephthalsäure, Dimethylterephthalat, Hexahydrophthalsäure, Trimellithsäure und Trimellithsäureanhydrid oder Mischungen der vorgenannten Säuren, sowie Polyesterpolyole aus Lactonen wie beispielsweise ε-caprolacton.

Besonders geeignet sind Polyesterdiole, insbesondere solche, die hergestellt sind aus Adipinsäure, Azelainsäure, Sebacinsäure, Dodecandicarbonsäure, Dimerfettsäure, Phthalsäure, Isophthalsäure und Terephthalsäure als Dicarbonsäure oder aus Lactonen wie beispielsweise ε-caprolacton und aus Ethylenglykol, Diethylenglykol, Neopentylglykol, 1,4-Butandiol, 1,6-Hexandiol, Dimerfettsäurediol und 1,4-Cyclohexandimethanol als zweiwertigem Alkohol.

Als Polycarbonatpolyole sind insbesondere jene geeignet, wie sie durch Umsetzung beispielsweise der oben genannten, zum Aufbau der Polyesterpolyole eingesetzten, Alkohole mit Dialkylcarbonaten wie Dimethylcarbonat, Diarylcarbonaten wie Diphenylcarbonat oder Phosgen zugänglich sind. Besonders geeignet sind Polycarbonatdiole, insbesondere amorphe Polycarbonatdiole.

Weitere geeignete Polyole sind Poly(meth)acrylatpolyole.

Weiterhin geeignet sind polyhydroxyfunktionelle Fette und Öle, beispielsweise natürliche Fette und Öle, insbesondere Rizinusöl, oder durch chemische Modifizierung von natürlichen Fetten und Ölen gewonnene, so genannte oleochemische, Polyole, die beispielsweise durch Epoxidierung ungesättigter Öle und anschliessender Ringöffnung mit Carbonsäuren bzw. Alkoholen erhaltenen Epoxypolyester bzw. Epoxypolyether, oder durch Hydroformylierung und Hydrierung ungesättigter Öle erhaltene Polyole. Weiterhin geeignet sind Polyole, welche aus natürlichen Fetten und Ölen durch Abbauprozesse wie Alkoholyse oder Ozonolyse und anschliessender chemischer Verknüpfung, beispielsweise durch Umesterung oder Dimerisierung, der so gewonnenen Abbauprodukte oder Derivate davon, erhalten werden. Geeignete Abbauprodukte von natürlichen Fetten und Ölen sind insbesondere Fettsäuren und Fettalkohole sowie Fettsäureester, insbesondere die Methylester (FAME), welche beispielsweise durch Hydroformylierung und Hydrierung zu Hydroxyfettsäureestern derivatisiert werden können.

Ebenfalls geeignet sind weiterhin Polykohlenwasserstoffpolyole, auch Oligohydrocarbonole genannt, beispielsweise polyhydroxyfunktionelle Ethylen-Propylen-, Ethylen-Butylen- oder Ethylen-Propylen-Dien-Copolymere, wie sie beispielsweise von der Firma Kraton Polymers, USA, hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, beispielsweise solche, die durch Copolymerisation von 1,3-Butadien und Allylalkohol hergestellt werden und auch hydriert sein können.
Weiterhin geeignet sind Polyhydroxyfunktionelle Acrylnitril/Butadien-Copolymere, wie sie beispielsweise aus Epoxiden oder Aminoalkoholen und carboxylterminierten Acrylnitril/Butadien-Copolymeren, welche kommerziell erhältlich sind unter dem Namen Hypro^{®} CTBN von der Firma Emerald Performance Materials, LLC, USA, hergestellt werden können.

Diese genannten Polyole weisen bevorzugt ein mittleres Molekulargewicht von 250 bis 30'000 g/mol, insbesondere von 1'000 bis 30'000 g/mol, und eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des endständige Isocyanatgruppen aufweisenden Polyurethanpolymers mitverwendet werden.

Als Polyisocyanate für die Herstellung des Polyurethanpolymers können handelsübliche Polyisocyanate, insbesondere Diisocyanate, verwendet werden. Beispielsweise sind geeignete Diisocyanate 1,6-Hexamethylendiisocyanat (HDI), 2-Methylpentamethylen-1,5-diisocyanat, 2,2,4- und 2,4,4-Trimethyl-1,6-hexamethylendiisocyanat (TMDI), 1,12-Dodecamethylendiisocyanat, Lysin- und Lysinesterdiisocyanat, Cyclohexan-1,3-diisocyanat, Cyclohexan-1,4-diisocyanat, 1-Isocyanato-3,3,5-trimethyl-5-isocyanatomethyl-cyclohexan (= Isophorondiisocyanat oder IPDI), Perhydro-2,4'-diphenylmethandiisocyanat und Perhydro-4,4'-diphenylmethandiisocyanat, 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3-xylylendiisocyanat, m- und p-Tetramethyl-1,4-xylylendiisocyanat, Bis-(1-Isocyanato-1-methylethyl)-naphthalin, 2,4- und 2,6-Toluylendiisocyanat (TDI), 4,4'-, 2,4'- und 2,2'-Diphenylmethandiisocyanat (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Oligomere und Polymere der vorgenannten Isocyanate, sowie beliebige Mischungen der vorgenannten Isocyanate.

In der erfindungsgemässen Zusammensetzung ist das isocyanatfunktionelle Polymer in einer Menge von 5 bis 20 Gew.-%, insbesondere in einer Menge von 7 bis 20 Gew.-%, bevorzugt 9 bis 18 Gew.-%, besonders bevorzugt 10 bis 16 Gew.-%, bezogen auf die gesamte Zusammensetzung, vorhanden.

Weiterhin kann die erfindungsgemässe Zusammensetzung, insbesondere als einkomponentige Zusammensetzung, auch einen oder mehrere sogenannt latente Härter enthalten. Dabei handelt es sich um chemisch oder physikalisch blockierte Amine, die bevorzugt unter Feuchtigkeitseinfluss, beispielsweise unter Abspaltung von Aldehyden zu freien Aminen hydrolysieren und danach mit den Isocyanaten unter Bildung einer Harnstoffbindung reagieren können. Solche latenten Härter sind dem Fachmann bekannt und dienen beispielsweise dazu, unerwünschte Bildung von Blasen in der aushärtenden Zusammensetzung zu verhindern, da mit der Verwendung von latenten Härtern die direkte Reaktion von Wasser mit Isocyanaten (ebenfalls zu Aminen, unter Abspaltung von gasförmigem CO₂) unterdrückt wird.
Geeignete latente Amine sind zum Beispiel Aldimine, Ketimine, Enamine, Oxazolidine, an einen Zeolith adsorbierte oder mikroverkapselte Amine sowie Amin-Metallkomplexe. Dabei besitzen diese Moleküle bevorzugt zwei oder mehr Aminfunktionen, um mit den isocyanatfunktionellen Polymeren beidseitig unter Verlängerung der Molekülkette reagieren zu können.
Besonders geeignet als latente Härter sind Aldimine, die beispielsweise in EP 2 017 260 A1 beschrieben werden.
Beispiele für geeignete Aldimine sind N,N'-Bis(2,2-dimethyl-3-lauroyloxypropyliden)-3-aminomethyl-3,5,5-trimethylcyclohexylamin, N,N'-Bis(2,2-dimethyl-3-lauroyloxypropyliden)-hexamethylene-1,6-diamin, N,N'-Bis(2,2-dimethyl-3-lauroyloxypropyliden)-polyoxypropylendiamine mit einem mittleren Molekulargewicht Mₙ im Bereich von 600 bis 900 g/mol, N,N',N"-Tris(2,2-dimethyl-3-lauroyloxypropyliden)-polyoxypropylentriamine mit einem mittleren Molekulargewicht Mₙ im Bereich von 1'000 bis 1'500 g/mol, N,N'-Bis(benzyliden)-polyoxypropylendiamine mit einem mittleren Molekulargewicht Mₙ im Bereich von 300 bis 500 g/mol, N,N'-Bis(isobutyliden)-3-aminomethyl-3,5,5-trimethylcyclohexylamin, kommerziell erhältlich als Vestamin^{®} A-139 (von Evonik Industries AG, Deutschland), N,N'-Bis(2,2-dimethyl-3-(N-morpholino)-propyliden)-3-amino-methyl-3,5,5-trimethylcyclohexylam in, N,N'-Bis(2,2-dimethyl-3-(N-morpholino)-propyliden)-hexamethylen-1,6-diamin, N,N'-Bis(2,2-dimethyl-3-(N-morpholino)-propyliden)-polyoxypropylendiamin mit einem mittleren Molekulargewicht Mₙ im Bereich von 400 bis 600 g/mol, N,N',N"-Tris(2,2-dimethyl-3-(N-morpholino)-propyliden)-polyoxypropylentriamin mit einem mittleren Molekulargewicht Mₙ im Bereich von 800 bis 1000 g/mol. Ebenfalls geeignet als latente Härter sind Oxazolidine, insbesondere Bis-Oxazolidine, wie insbesondere kommerziell erhältliche Typen wie Härter OZ (von Bayer MaterialScience AG, Deutschland), Zoldine^{®} RD-4 (von Angus Chemical Co, USA), sowie Incozol^{®} LV, Incozol^{®} 4, Incozol^{®} HP, Incozol^{®} NC, Incozol^{®} CF, Incozol^{®} EH und Incozol^{®} K (von Incorez Ltd, UK).

Die erfindungsgemässe Zusammensetzung kann weiterhin mindestens einen Katalysator enthalten, der die Hydrolyse des latenten Härters beschleunigt. Insbesondere falls als latente Härter Aldimine verwendet werden, sind bevorzugte solche Katalysatoren Säuren, beispielsweise organische Carbonsäuren wie Benzoesäure, Salicylsäure oder 2-Nitrobenzoesäure, organische Carbonsäureanhydride wie Phthalsäureanhydrid oder Hexahydrophthalsäureanhydrid, Silylester von organischen Carbonsäuren, organische Sulfonsäuren wie Methansulfonsäure, p-Toluolsulfonsäure oder 4-Dodecylbenzolsulfonsäure, oder weitere organische oder anorganische Säuren, sowie Mischungen der vorgenannten Säuren oder Säureester. Ebenfalls geeignet sind Metallverbindungen, beispielsweise Zinnverbindungen, zum Beispiel Dialkylzinndicarboxylate wie Dibutylzinndiacetat, Dibutylzinn-bis-(2-ethylhexanoat), Dibutylzinndilaurat, Dibutylzinndipalmitat, Dibutylzinndistearat, Dibutylzinndioleat, Dibutylzinndilinolat, Dibutylzinndilinolenat, Dibutylzinndiacetylacetonat, Dibutylzinnmaleat, Dibutylzinn-bis-(octylmaleinat), Dibutylzinnphthalat, Dimethylzinndilaurat, Dioctylzinndiacetat oder Dioctylzinndilaurat, Dialkylzinnmercaptide wie Dibutylzinnbis-(2-ethylhexylmercaptoacetat) oder Dioctylzinn-bis-(2-ethylhexyl mercaptoacetat), Dibutylzinndichlorid, Monobutylzinntrichlorid, Alkylzinnthioester, Dibutylzinnoxid, Dioctylzinnoxid, Zinn(II)-carboxylate wie Zinn(II)-octoat, Zinn(II)-2-ethylhexanoat, Zinn(II)-laurat, Zinn(II)-oleat oder Zinn(II)-naphtenat, Stannoxane wie Laurylstannoxan, Bismutverbindungen wie Bismut(III)-octoat, Bismut(III)-neodecanoat oder Bismut(III)-oxinate; schwach basische tertiäre Aminverbindungen wie beispielsweise 2,2'-Dimorpholinodiethylether und andere Morpholinether-Derivate; sowie Kombinationen der genannten Verbindungen, insbesondere von Säuren und Metallverbindungen oder von Metallverbindungen und aminogruppenhaltigen Verbindungen.

Weiterhin kann die erfindungsgemässe Zusammensetzung mindestens einen Katalysator für die Vernetzung von isocyanatfunktionellen Polymeren enthalten. Dabei kann es sich um einen Katalysator handeln, der auch die oben beschriebene Hydrolyse des latenten Härters katalysiert, oder um eine oder mehrere andere Verbindungen.

Insbesondere handelt es sich beim geeigneten Katalysator für die Vernetzung der isocyanatfunktionellen Polymere um einen Metallkatalysator, zum Beispiel einen Metallkomplex, oder um eine stickstoffhaltige Verbindung.
Geeignete Metallkatalysatoren sind beispielsweise Verbindungen von Bismut oder Zinn, insbesondere Organozinnverbindungen oder Organobismutverbindungen, wobei diese Metallkatalysatoren insbesondere Alkoxygruppen, Sulfonatgruppen, Carboxylgruppen, Dialkylphosphatgruppen, Dialkylpyrophosphatgruppen und Diketonatgruppen aufweisen.
Besonders geeignete Organozinnverbindungen sind Dialkylzinnoxide, Dialkylzinndichloride, Dialkylzinndicarboxylate und Dialkylzinndiketonate, insbesondere Dibutylzinnoxid, Dibutylzinndichlorid, Dibutylzinndiacetat, Dibutylzinndilaurat, Dibutylzinndiacetylacetonat, Dioctylzinnoxid, Dioctylzinndichlorid, Dioctylzinndiacetat, Dioctylzinndilaurat und Dioctylzinndiacetylacetonat, sowie Alkylzinnthioester.
Besonders geeignete Bismutverbindungen sind Bismuttrioctoat und Bismuttris(neodecanoat).
Weitere geeignete Metallkatalysatoren sind beispielsweise Verbindungen von Zink, Mangan, Eisen, Chrom, Cobalt, Kupfer, Nickel, Molybdän, Blei, Cadmium, Quecksilber, Antimon, Vanadium, Titan, Zirconium oder Kalium, wie Zink(II)-acetat, Zink(II)-2-ethylhexanoat, Zink(II)-laurat, Zink(II)-oleat, Zink(II)-naphthenat, Zink(II)-acetylacetonat, Zink(II)-Salicylat, Mangan(II)-2-ethylhexanoat, Eisen(III)-2-ethylhexanoat, Eisen(III)-acetylacetonat, Chrom(III)-2-ethylhexanoat, Cobalt(II)-naphthenat, Cobalt(II)-2-ethylhexanoat, Kupfer(II)-2-ethylhexanoat, Nickel(II)-naphthenat, Phenylquecksilber-neodecanoat, Blei(II)-acetat, Blei(II)-2-ethylhexanoat, Blei(II)-neodecanoat, Blei(II)-acetylacetonat, Aluminiumlactat, Aluminiumoleat, Aluminium(III)-acetylacetonat, Diisopropoxytitan-bis-(ethylacetoacetat),Dibutoxytitan-bis-(ethylacetoacetat), Dibutoxytitan-bis-(acetylacetonat), Kalium-acetat, Kalium-octoat;
Als Katalysator geeignete stickstoffhaltige Verbindungen sind insbesondere Amine wie insbesondere N-Ethyl-diisopropylamin, N,N,N',N'-Tetramethylalkylendiamine, Polyoxyalkylenamine, 1,4-Diazabicyclo[2.2.2]octan; Amidine wie insbesondere 1,8-Diazabicyclo[5.4.0]undec-7-en (DBU), 1,5-Diazabicyclo[4.3.0]non-5-en (DBN), 6-Dibutylamino-1,8-diazabicyclo[5.4.0]undec-7-en; Guanidine wie insbesondere Tetramethylguanidin, 2-Guanidinobenzimidazol, Acetylacetoneguanidin, 1,3-Di-o-tolylguanidin, 2-tert.Butyl-1,1,3,3-tetramethylguanidin; und Imidazole wie insbesondere N-(3-Trimethoxysilylpropyl)-4,5-dihydroimidazol und N-(3-Triethoxysilylpropyl)-4,5-dihydroimidazol.
Insbesondere geeignet sind auch Kombinationen verschiedener Katalysatoren, insbesondere Kombinationen aus mindestens einem Metallkatalysator und mindestens einer stickstoffhaltigen Verbindung.
Als Katalysator bevorzugt sind Organozinnverbindungen, Amine, Amidine, Guanidine und Imidazole. Besonders bevorzugt sind Organozinnverbindungen und Amidine.

Der Anteil eines allfällig vorhandenen Katalysators in der erfindungsgemässen Zusammensetzung beträgt 0.001 bis 0.5 Gew.-%, bevorzugt 0.005 bis 0.15 Gew.-%, insbesondere bevorzugt 0.01 bis 0.1 Gew.-%, bezogen auf die Gesamtzusammensetzung.

Weiterhin enthält die Zusammensetzung mindestens 70 Gew.-% von mindestens einem Füllstoff. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Kreiden (die gänzlich oder vorwiegend aus Calciumcarbonat bestehen), welche gegebenenfalls mit Fettsäuren, insbesondere Stearinsäure, beschichtet sind, Bariumsulfat (BaSO₄, auch Baryt oder Schwerspat genannt), calcinierte Kaoline, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black), PVC-Pulver oder Hohlkugeln. Bevorzugte Füllstoffe sind Calciumcarbonate, calcinierte Kaoline, Russ, hochdisperse Kieselsäuren sowie flammhemmende Füllstoffe, wie Hydroxide oder Hydrate, insbesondere Hydroxide oder Hydrate von Aluminium, bevorzugt Aluminiumhydroxid.
Es ist durchaus möglich und kann sogar von Vorteil sein, eine Mischung verschiedener Füllstoffe einzusetzen.
Für die erfindungsgemässe Zusammensetzung sehr bevorzugt ist Kreide als Füllstoff. Insbesondere bevorzugt ist unbeschichtete Kreide, am meisten bevorzugt unbeschichtete, gemahlene Kreide, wie beispielsweise erhältlich unter dem Namen Omyacarb^{®} 40 GU (Omya AG, Schweiz).

Insbesondere liegt der Anteil an Füllstoff im Bereich von 70 bis 80 Gew.-%, bevorzugt 70 bis 77 Gew.-%, bezogen auf die gesamte Zusammensetzung. Meist bevorzugt umfasst die Zusammensetzung mehr als 71 Gew.-% Füllstoff, vorzugsweise 72 Gew.-% oder mehr, bezogen auf die Gesamtzusammensetzung.

Weiter enthält die erfindungsgmässe Zusammensetzung 7 bis 20 Gew.-% Rapsölmethylester, auch genannt Rapsmethylester, oft abgekürzt RME. Dabei handelt es sich um das Verersterungsprodukt mit Methanol von verschiedenen Fettsäuren des bevorzugt raffinierten Öls der Rapspflanze (*Brassica napus*) und seltener des verwandten Ölrübsens (*Brassica rapa* subsp. *Oleifera*), und möglicherweise weiterer verwandter Pflanzen, beispielsweise gewonnen in einer Umesterungsreaktion der pflanzlichen Glycerinester.
Rapsölmethylester wird beispielsweise dem Motorenkraftstoff "Biodiesel" zugesetzt und ist kommerziell erhältlich, zum Beispiel von Oleon N.V., Belgien.

Insbesondere liegt der Anteil an Rapsölmethylester in der erfindungsgemässen Zusammensetzung im Bereich von 8 bis 18 Gew.-%, bevorzugt 9 bis 15 Gew.-%, besonders bevorzugt 10 bis 12 Gew.-%, bezogen auf die Gesamtzusammensetzung.

Weiterhin kann die erfindungsgemässe Zusammensetzung zusätzlich weitere Bestandteile enthalten. Beispielsweise sind derartige Bestandteile:
- Zusätzliche Weichmacher, beispielsweise Ester organischer Carbonsäuren oder deren Anhydride, Phthalate, wie beispielsweise Dioctylphthalat oder Diisodecylphthalat, Adipate, wie zum Beispiel Dioctyladipat, Sebacate, Polyole wie beispielsweise Polyoxyalkylenpolyole oder Polyesterpolyole, organische Phosphor- und Sulfonsäureester oder Polybutene;
- Lösemittel, beispielsweise Ketone wie Aceton, Methylethylketon, Diisobutylketon, Acetonylaceton, Mesityloxid, sowie cyclische Ketone wie Methylcyclohexanon und Cyclohexanon; Ester wie Ethylacetat, Propylacetat oder Butylacetat, Formiate, Propionate oder Malonate; Ether wie Ketonether, Esterether und Dialkylether wie Diisopropylether, Diethylether, Dibutylether, Diethylenglykoldiethylether sowie Ethylenglykoldiethylether; aliphatische und aromatische Kohlenwasserstoffe wie Toluol, Xylol, Heptan, Octan sowie unterschiedliche Erdölfraktionen wie Naphtha, White Spirit, Petrolether oder Benzin; halogenierte Kohlenwasserstoffe wie Methylenchlorid; sowie N-alkylierte Lactame wie beispielsweise N-Methylpyrrolidon, N-Cyclohexylpyrrolidon oder N-Dodecylpyrrolidon;
- weitere in der Polyurethanchemie übliche Katalysatoren;
- Reaktivverdünner und Vernetzer, beispielsweise Polyisocyanate wie MDI, PMDI, TDI, HDI, 1,12-Dodecamethylendiisocyanat, Cyclohexan-1,3- oder 1,4-diisocyanat, IPDI, Perhydro-2,4'- und -4,4'-diphenylmethandiisocyanat, 1,3-und 1,4-Tetramethylxylylendiisocyanat, Oligomere und Polymere dieser Polyisocyanate, insbesondere Isocyanurate, Carbodiimide, Uretonimine, Biurete, Allophanate und Iminooxadiazindione der genannten Polyisocyanate, Addukte von Polyisocyanaten mit kurzkettigen Polyolen, sowie Adipinsäure-dihydrazid und andere Dihydrazide;
- Trocknungsmittel, wie beispielsweise p-Tosylisocyanat und andere reaktive Isocyanate, Orthoameisensäureester, Calciumoxid; Vinyltrimethoxysilan oder andere schnell hydrolysierende Silane wie beispielsweise Organoalkoxysilane, welche in α-Stellung zur Silangruppe eine funktionelle Gruppe aufweisen, oder Molekularsiebe;
- Rheologie-Modifizierer wie beispielsweise Verdickungsmittel, zum Beispiel Harnstoffverbindungen der Art, wie sie als Thixotropierungsmittel ("Thixotropy endowning agent") in WO 02/48228 A2 auf den Seiten 9 bis 11 beschrieben sind, Polyamidwachse, Bentonite oder pyrogene Kieselsäuren;
- Haftvermittler, insbesondere Silane wie beispielsweise Epoxysilane,Vinylsilane,(Meth)acrylsilane,Isocyanatosilane,Carbamatosilane,S-(Alkylcarbonyl)-mercaptosilane und Aldiminosilane, sowie oligomere Formen dieser Silane;
- Stabilisatoren gegen Wärme, Licht- und UV-Strahlung; flammhemmende Substanzen;
- oberflächenaktive Substanzen wie beispielsweise Netzmittel, Verlaufsmittel, Entlüftungsmittel oder Entschäumer;
- Biozide wie beispielsweise Algizide, Fungizide oder das Pilzwachstum hemmende Substanzen;
sowie weitere üblicherweise in einkomponentigen Isocyanat-haltigen Zusammensetzungen eingesetzte Substanzen, wie zum Beispiel Fasern, beispielsweise aus Polyethylen; Farbstoffe, Pigmente, oder andere dem Fachmann bekannte Zusatzstoffe.

Bevorzugt enthält die erfindungsgemässe Zusammensetzung neben dem Rapsölmethylester keine weiteren Weichmacher. Meist bevorzugt ist die Zusammensetzung phthalatfrei.

In einer besonders bevorzugten Ausführungsform umfasst die erfindungsgemässe Zusammensetzung:
a) 9 Gew.-% bis 16 Gew.-% von mindestens einem isocyanatfunktionellen Polymer,
b) 10 Gew.-% bis 12 Gew.-% Rapsölmethylester,
c) 70 Gew.-% bis 77 Gew.-% von mindestens einer Sorte Kreide, insbesondere einer unbeschichteten Kreide,
d) 0 Gew.-% bis 2 Gew.-% mindetens eines latenten Härters, insbe sondere eines Aldimins,
e) 0 Gew.-% bis 0.5 Gew.-% mindestens eines Katalysators, und
f) 0 Gew.-% bis 2 Gew.-% mindestens eines Trocknungsmittels, bezogen auf die Gesamtzusammensetzung.
Eine derartige Zusammensetzung eignet sich zum Beispiel als Parkettklebstoff oder als elastische Dichtmasse, beispielsweise in Fugen, da sie eine für solche Anwendungen nötige relativ hohe Bruchdehnung aufweist.

Es ist vorteilhaft, alle genannten, in der Zusammensetzung gegebenenfalls vorhandenen Bestandteile, insbesondere Füllstoff und Katalysator- bzw. Beschleunigersystem, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur unwesentlich verändert. Dies bedingt, dass zur chemischen Aushärtung der beschriebenen Zusammensetzung führende Reaktionen, insbesondere der Hydrolyse allfällig vorhandener latenter Amine oder die Reaktion von Isocyanaten mit Wasser, sowie anschliessender Amin-Isocyanat-Addition, während der Lagerung nicht in signifikantem Ausmass auftreten. Üblicherweise wird die Lagerstabilität über die Messung der Viskosität oder der Auspresskraft ermittelt. Es ist deshalb insbesondere von Vorteil, dass die genannten Bestandteile kein oder höchstens Spuren von Wasser enthalten oder beim Lagern freisetzen. Deshalb kann es sinnvoll sein, gewisse Bestandteile vor dem Einmischen in die Zusammensetzung chemisch oder physikalisch zu trocknen.

Unter dem Einfluss von Feuchtigkeit, beispielsweise beim Kontakt mit feuchter Luft oder nach dem Zumischen von Wasser, oder bei starker Erwärmung, oder unter dem Einfluss von UV-Strahlung, oder unter dem Einfluss einer Kombination dieser Faktoren, härtet die erfindungsgemässe Zusammensetzung unter Vernetzung der isocyanatfunktionellen Polymere (entweder über Hydrolyse der latenten Härter oder durch Wasser entstehende Bildung von Aminen aus einem Teil der Isocyanate und anschliessender Amin-Isocyanat-Addition) rasch aus. Die Aushärtung verläuft bei Verwendung eines latenten Härters weitgehend ohne Blasenbildung, da die Isocyanatgruppen teilweise oder vollständig beispielsweise mit den hydrolysierenden Aldiminogruppen reagieren, wobei nur wenig oder gar kein CO₂ entsteht. Die Aushärtung wird durch die Anwesenheit von Katalysatoren für die Hydrolyse der latenten Härter, beispielsweise die bereits genannten organischen Carbonsäuren oder Sulfonsäuren, zusätzlich beschleunigt, ohne dass es dabei in signifikantem Masse zur Blasenbildung kommt. Die zur Aushärtung benötigte Feuchtigkeit kann aus der Luft stammen (Luftfeuchtigkeit), wobei die Zusammensetzung durch die Diffusion der Feuchtigkeit von aussen nach innen aushärtet. Die Zusammensetzung kann aber auch mit einer Wasser enthaltenden Komponente in Kontakt gebracht werden, zum Beispiel durch Bestreichen, beispielsweise mit einem Abglättmittel, durch Besprühen oder mittels Eintauchverfahren, oder es kann der Zusammensetzung eine Wasser enthaltende Komponente zugesetzt werden, zum Beispiel in Form einer wasserhaltigen Paste, die beispielsweise über einen Statikmischer homogen oder heterogen mit der Zusammensetzung vermischt wird.

Weiterhin umfasst die vorliegende Erfindung die Verwendung einer vorhergehend beschriebenen Zusammensetzung als feuchtigkeitshärtender Klebstoff, Dichtstoff oder Beschichtung. Die erfindungsgemässe Zusammensetzung eignet sich insbesondere für die Applikation auf Beton, Mörtel, Backstein, Ziegel, Gips, ein Naturstein wie Granit oder Marmor, Glas, Glaskeramik, Metall oder Metalllegierung, Holz, Kunststoff und Lack.
Bevorzugt ist die Verwendung der Zusammensetzung als Parkettklebstoff, beispielsweise für Massivparkett, Stabparkett (Nut und Feder), Lamparkett, Industrieparkett, Dielen, Mosaikparkett, Holzpflaster sowie Holzspanplatten, vorzugsweise für die vollflächige Verklebung.
Ebenfalls bevorzugt ist die Verwendung der Zusammensetzung als Dichtstoff, beispielsweise für Anschlussfugen oder Bewegungsfugen.

Die erfindungsgemässe Zusammensetzung weist bevorzugt eine pastöse Konsistenz mit strukturviskosen Eigenschaften auf. Eine solche Zusammensetzung wird mittels einer geeigneten Vorrichtung auf das Substrat aufgetragen, beispielsweise aus einer Kartusche oder mittels Zahnspachtel aus einem grösseren Gebinde. Eine erfindungsgemässe Zusammensetzung mit guten Applikationseigenschaften weist bevorzugt eine hohe Standfestigkeit und einen kurzen Fadenzug sowie tiefe Viskosität bzw. Auspresskraft auf. Das heisst, sie lässt sich mit dem Zahnspachtel mit wenig Kraft verstreichen, bleibt nach der Applikation in der applizierten Form stehen, fliesst also nicht auseinander, und zieht nach dem Absetzen des Applikationsgerätes keinen oder nur einen sehr kurzen Faden, so dass das Substrat nicht verschmutzt wird.
Insbesondere weist die erfindungsgemässe Zusammensetzung eine niedrige Auspresskraft auf, gemessen nach der weiter unten beschriebenen Methode (siehe Beispiele) nach Konditionierung während 24 h bei 23 °C. In einer bevorzugten Ausführungsform beträgt die gemessene Auspresskraft ≤ 1600 N, in einer meist bevorzugten Ausführungsform ≤ 1000 N.
Die erfindungsgemässe Zusammensetzung wird insbesondere in einem Temperaturbereich zwischen 5 und 45°C, bevorzugt im Bereich der Raumtemperatur, aufgetragen und härtet auch bei diesen Bedingungen aus.

Weiterhin betrifft die Erfindung eine ausgehärtete Zusammensetzung, welche erhältlich ist aus einer Zusammensetzung, wie sie vorhergehend beschrieben worden ist, nach deren Härtung mit Wasser, insbesondere in Form von Luftfeuchtigkeit.

Bei den Artikeln, welche mit einer erfindungsgemässen Zusammensetzung verklebt, abgedichtet oder beschichtet werden, handelt es sich insbesondere um ein Bauwerk, insbesondere ein Bauwerk des Hoch- oder Tiefbaus, um ein industriell gefertigtes Gut oder um ein Konsumgut, insbesondere ein Fenster, eine Haushaltsmaschine, oder ein Transportmittel oder ein Anbauteil eines Transportmittels.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### Testverfahren

Die **Zugfestigkeit** und die **Bruchdehnung** wurden nach DIN 53504 (Zuggeschwindigkeit: 200 mm/min) an während 7 Tagen bei 23°C und 50% relativer Luftfeuchtigkeit ausgehärteten Filmen mit einer Schichtdicke von 2 mm bestimmt.

Die **Shore A-Härte** wurde bestimmt nach DIN 53505, an während 7 Tagen bei 23°C und 50% relativer Luftfeuchtigkeit ausgehärteten Probekörpern mit einer Schichtdicke von 6 mm.

Die **Hautbildungszeit** (Zeit bis zur Klebefreiheit, "tack-free time") wurde bei 23°C und 50% relativer Luftfeuchtigkeit bestimmt. Zur Bestimmung der Hautbildungszeit wurde ein kleiner Teil des raumtemperaturwarmen Klebstoffs in einer Schichtdicke von ca. 2 mm auf Pappkarton aufgetragen und die Zeit bestimmt, die es dauerte, bis beim leichten Antippen der Oberfläche des Klebstoffs mittels Finger erstmals keine Rückstände auf dem Finger mehr zurückblieben.

Für die Bestimmung der **Auspresskraft** wurden die Zusammensetzungen in innenlackierte Aluminiumkartuschen (Durchmesser aussen 46.9 mm, Durchmesser innen 46.2 mm Länge 215 mm, metrisches ISO-Gewinde M15 x 1.5 mm) gefüllt und mit einem Polyethlyen Stopfen (Durchmesser 46.1 mm) von Novelis Deutschland GmbH luftdicht verschlossen. Nach einer Konditionierung von 24 Stunden bei 23°C wurden die Kartuschen geöffnet und mittels Auspressgerät ausgepresst. Dafür wurde eine Düse mit einer 2 mm Innendurchmesser-Öffnung auf das Kartuschengewinde aufgeschraubt. Mit einem Auspressgerät (Zwick/Roell Z005) wurde die Kraft bestimmt, die benötigt wurde, um die Zusammensetzung mit einer Auspressgeschwindigkeit von 60 mm/min auszupressen. Der angegebene Wert ist ein Mittelwert aus den Kräften, die nach einem Auspressweg von 22 mm, 24 mm, 26 mm und 28 mm gemessen wurde. Nach 30 mm Auspressweg wurde die Messung gestoppt.
Eine zweite Messreihe wurde durchgeführt, nachdem identische Kartuschen jeweils während 7 Tagen bei 60 °C gelagert und danach auf Raumtemperatur abgekühlt wurden. Die Durchführung dieser Messungen zur Auspresskraft erfolgte danach in der gleichen Vorgehensweise wie bei der ersten Messreihe. Diese zweite Messreihe diente einer Einschätzung der Lagerstabilität der Zusammensetzungen.

### Herstellung des isocyanatfunktionellen Polymers P-1

Unter Stickstoffatmosphäre wurden 5687 g Polyol Acclaim^{®} 4200 (Bayer MaterialScience AG, Deutschland), 712 g Desmodur 44 MC L (Bayer MaterialScience AG, Deutschland) und 0.6 g DABCO 33 LV (Air Products & Chemicals Inc., USA) unter stetigem Rühren auf 80 °C aufgeheizt und bei dieser Temperatur belassen. Nach einer Stunde Reaktionszeit wurde mittels Titration ein freier Gehalt an Isocyanatgruppen von 1.9 Gew.-% erreicht.

### Herstellung des Aldimins A-1

Unter Stickstoffatmosphäre wurden 101.8 g (0.36 mol) destillativ gereinigtes 2,2-Dimethyl-3-lauryloxypropanal in einen Rundkolben vorgelegt. Unter kräftigem Rühren wurden 20.0 g (0.35 mol N) 1,6-Hexamethylendiamin (BASF; Amingehalt 17.04 mmol N/g) aus einem geheizten Tropftrichter langsam zugegeben. Im Verlauf der Zugabe erwärmte sich die Reaktionsmischung und wurde zunehmend trübe. Nach kompletter Zugabe des Amins wurden die flüchtigen Reaktionsprodukte unter erniedrigtem Druck entfernt (10 mbar, 80 °C) und 115.4 g eines blassgelben Öls mit einem Amingehalt von 2.94 mmol N/g wurden erhalten.

### Herstellung der Zusammensetzungen Z-1 bis Z-8

In einem Vakuummischer wurden entsprechend den in der Tabelle 1 angegebenen Gewichtsteilen (Gew.-%) 3530 g getrocknete Kreide Omyacarb^{®} 40 GU (Omya AG, Schweiz) mit 500 g des jeweiligen Weichmachers vorgelegt (z.B. Rapsölmethylester für Beispiel 1; siehe Tabelle 2 für eine detaillierte Liste der verwendeten Weichmacher). Daraufhin wurden 355 g Polymer P-1 zugegeben, gefolgt von 50 g Additive TI (OMG Borchers GmbH, Deutschland) und 50 g Desmodur CD-L (Bayer MaterialScience AG, Deutschland). Anschliessend wurden noch einmal 400 g Polymer P-1 zugegeben, gefolgt von 100 g Aldimin A-1. Zuletzt wurden 14 g Salicylsäure (5 Gew.-% in DOA; DOA = Bis(2-ethylhexyl)adipat; z.B. Eastman Chemical Company, USA) und 1 g Dibutylzinndilaurat (z.B: Jacobson Chemicals Ltd., UK) zugegeben. Der Mischer wurde verschlossen und während 20 min bei 1000-1200 Umdrehungen unter Vakuum gerührt und zu einer homogenen Paste mit einer Gesamtmasse von 5000 g verarbeitet. Diese wurde dann in innenlackierte Aluminium-Spreizkolbenkartuschen abgefüllt.

**Tabelle 1: Inhaltsstoffe in Gewichtsteilen (Gew.-%) der erfindungsgemässen Zusammensetzung Z-1 und der Referenzzusammensetzungen Z-2 bis Z-8.**

| | ***Z-1*** | ***Z-2*** | ***Z-3*** | ***Z-4*** | ***Z-5*** | ***Z-6*** | ***Z-7*** | ***Z-8*** |
|---|---|---|---|---|---|---|---|---|
| Omyacarb 40 GU | 70.6 | 70.6 | 70.6 | 70.6 | 70.6 | 70.6 | 70.6 | 70.6 |
| Polymer P-1 | 15.1 | 15.1 | 15.1 | 15.1 | 15.1 | 15.1 | 15.1 | 15.1 |
| Rapsölmethylester | 10 | | | | | | | |
| DIDP | | 10 | | | | | | |
| DOA | | | 10 | | | | | |
| EME-100 | | | | 10 | | | | |
| ETO-100 | | | | | 10 | | | |
| SNS-100 | | | | | | 10 | | |
| Hexamoll DINCH | | | | | | | 10 | |
| Mesamoll | | | | | | | | 10 |
| Aldimin *A-1* | 2 | 2 | 2 | 2 | 2 | 2 | 2 | 2 |
| Additive TI | 1 | 1 | 1 | 1 | 1 | 1 | 1 | 1 |
| Desmodur CD-L | 1 | 1 | 1 | 1 | 1 | 1 | 1 | 1 |
| DBTL | 0.02 | 0.02 | 0.02 | 0.02 | 0.02 | 0.02 | 0.02 | 0.02 |
| Salicylsäure (5% in DOA) | 0.28 | 0.28 | 0.28 | 0.28 | 0.28 | 0.28 | 0.28 | 0.28 |

**Tabelle 2: Verwendete Weichmacher für die Herstellung der Zusammensetzungen Z-1 bis Z-8 nach obengenanntem Herstellverfahren.**

| | Weichmacher | Hersteller |
|---|---|---|
| ***Z-1*** | Rapsölmethylester (RME) | Oleon N.V., Belgien |
| ***Z-2*** | DIDP (Diisodecylphthalat) | ExxonMobil, USA |
| ***Z-3*** | DOA (Bis(2-ethylhexyl)adipat) | Eastman Chem., USA |
| ***Z-4*** | EME-100 (Sojamethylester-Basis) | Chimista Specialty Chem, USA |
| ***Z-5*** | ETO-100 (Kiefernölester-Basis) | Chimista Specialty Chem, USA |
| ***Z-6*** | SNS-100 (Rizinusöl-Basis) | Chimista Specialty Chem, USA |
| ***Z-7*** | Hexannoll^{®} DINCH^{®} | BASF SE, Deutschland |
| ***Z-8*** | Mesamoll^{®} | Lanxess AG, Deutschland |

**Tabelle 3: Testresultate der erfindungsgemässen Zusammensetzung Z-1 und der Referenzzusammensetzungen Z-2 bis Z-8 nach den wie ter oben beschriebenen Methoden.**

| | ***Z-1*** | ***Z-2*** | ***Z-3*** | ***Z-4*** | ***Z-5*** | ***Z-6*** | ***Z-7*** | ***Z-8*** |
|---|---|---|---|---|---|---|---|---|
| Zugfestigkeit [MPa] | 0.61 | 0.86 | 0.98 | 0.57 | 0.63 | 0.87 | 0.95 | 0.94 |
| Bruchdehnung [%] | 308 | 112 | 78 | 56 | 310 | 87 | 76 | 94 |
| Shore A | 49 | 56 | 60 | 50 | 53 | 57 | 58 | 58 |
| Hautbildungszeit [min] | 13 | 15 | 18 | 12 | 7 | 15 | 16 | 16 |
| Auspresskraft [N] 1d RT (2 mm) | 858 | 2401 | 1527 | 1547 | 2370 | 2615 | 2118 | 2300 |
| Auspresskraft [N] 7d 60 °C (2 mm) | 819 | 2600 | 1450 | 1903 | >3200 | 2709 | 2216 | >3200 |

Das erfindungsgemässe Beispiel Z-1 (siehe Tabelle 3) zeigt deutlich, dass unter Verwendung von Rapsölmethylester als Weichmacher in hochgefüllten Zusammensetzungen mit mehr als 70 Gew.-% Füllstoff die Auspresskraft deutlich unter 1000 N liegt, selbst nach einer Lagerung der Kartusche bei 60 °C während 7 Tagen, was auch für eine gute Lagerstabilität spricht. Im Vergleich dazu weisen alle Referenzbeispiele Z-2 bis Z-8 eine deutlich höhere Auspresskraft, sowohl im Frischzustand wie nach Lagerung bei 60 °C. Für ein anwenderfreundliches Produkt sind jedoch möglichst niedrige Auspresskräfte wünschenswert. Gleichzeitig machen die Daten in Tabelle 3 deutlich, dass die erfindungsgemässe Zusammensetzung Z-1 im ausgehärteten Zustand bezüglich mechanischer Werte (Zugfestigkeit, Bruchdehnung, Shore A) eine Eignung als Kleb- und Dichtstoff nahelegt.

### Herstellung der Zusammensetzungen Z-9 bis Z-14

Die Herstellung dieser erfindungsgemässen Zusammensetzungen erfolgte unter Variation der Füllstoffmenge, der Menge des Rapsölmethylesters und/oder des Polymers P-1. Die Gesamtmasse der einzelnen Zusammensetzungen wurde aber ebenfalls jeweils auf 5000 g eingestellt. In einem Vakuummischer wurden entsprechend den in der Tabelle 4 angegebenen Gewichtsteilen (Gew.-%) getrocknete Kreide Omyacarb^{®} 40 GU (Omya AG, Schweiz) mit Rapsölmethylester vorgelegt. Daraufhin wurde jeweils die Hälfte Polymer P-1 zugegeben, gefolgt von 50 g Additive TI (OMG Borchers GmbH, Deutschland) und 50 g Desmodur CD-L (Bayer MaterialScience AG, Deutschland). Anschliessend wurden die zweite Hälfte Polymer P-1 zugegeben, gefolgt von 100 g Aldimin A-1. Zuletzt wurden 14 g Salicylsäure (5 Gew.-% in DOA; DOA = Bis(2-ethylhexyl)adipat; z.B. Eastman Chemical Company, USA) und 1 g Dibutylzinndilaurat (z.B: Jacobson Chemicals Ltd., UK) zugegeben. Der Mischer wurde verschlossen und während 20 min bei 1000-1200 Umdrehungen unter Vakuum gerührt und zu einer homogenen Paste mit einer Gesamtmasse von 5000 g verarbeitet. Diese wurde dann in innenlackierte Aluminium-Spreizkolbenkartuschen abgefüllt.

**Tabelle 4: Inhaltsstoffe in Gewichtsteilen (Gew.-%) der erfindungsgemässen Zusammensetzungen Z-9 bis Z-14 sowie die Resultate der Messungen zur Auspresskraft, entsprechend der weiter oben beschriebenen Methode.**

| | ***Z-9*** | ***Z-10*** | ***Z-11*** | ***Z-12*** | ***Z-13*** | ***Z-14*** |
|---|---|---|---|---|---|---|
| Omyacarb 40 GU | 70.6 | 70.6 | 70.6 | 72.6 | 74.6 | 76.6 |
| Polymer P-1 | 16.1 | 17.1 | 18.1 | 13.1 | 11.1 | 9.1 |
| Rapsölmethylester | 9 | 8 | 7 | 10 | 10 | 10 |
| Aldimin *A-1* | 2 | 2 | 2 | 2 | 2 | 2 |
| Additive TI | 1 | 1 | 1 | 1 | 1 | 1 |
| Desmodur CD-L | 1 | 1 | 1 | 1 | 1 | 1 |
| DBTL | 0.02 | 0.02 | 0.02 | 0.02 | 0.02 | 0.02 |
| Salicylsäure (5% in DOA) | 0.28 | 0.28 | 0.28 | 0.28 | 0.28 | 0.28 |
| | | | | | | |
| Auspresskraft [N] 1d RT (2 mm) | 982 | 1241 | 1590 | 866 | 907 | 994 |
| Auspresskraft [N] 7d 60°C (2mm) | 985 | 1232 | 1482 | 960 | 1089 | 1110 |

Die erfindungsgemässen Zusammensetzungen Z-9 bis Z-14 (siehe Tabelle 4) zeigen den Einfluss der einzelnen Bestandteile auf die Auspresskraft. Insbesondere die Zusammensetzung Z-14 mit 76.6 Gew.-% Kreide, bezogen auf die Gesamtzusammensetzung, weist angesichts des hohen Füllstoffgehaltes auffallend niedrige Auspresskräfte auf.

## Patentansprüche

1. Feuchtigkeitshärtende Zusammensetzung enthaltend
a) 5 Gew.-% bis 20 Gew.-% von mindestens einem isocyanatfunktionellen Polymer,
b) 7 Gew.-% bis 20 Gew.-% Rapsölmethylester und
c) 70 Gew.-% bis 88 Gew.-% von mindestens einem Füllstoff, bezogen auf die Gesamtzusammensetzung.

2. Feuchtigkeitshärtende Zusammensetzung gemäss Anspruch 1, **dadurch gekennzeichnet, dass** das isocyanatfunktionelle Polymer mit einem Anteil von 7 Gew.-% bis 20 Gew.-%, bevorzugt 9 Gew.-% bis 18 Gew.-%, besonders bevorzugt 10 Gew.-% bis 16 Gew.-%, bezogen auf die Gesamtzusammensetzung, enthalten ist.

3. Feuchtigkeitshärtende Zusammensetzung gemäss einem der vorhergehenden Ansprüche, **dadurch gekennzeichnet, dass** Rapsölmethylester mit einem Anteil 8 Gew.-% bis 18 Gew.-%, bevorzugt 9 Gew.-% bis 15 Gew.-%, besonders bevorzugt 10 Gew.-% bis 12 Gew.-%, bezogen auf die Gesamtzusammensetzung, enthalten ist.

4. Feuchtigkeitshärtende Zusammensetzung gemäss einem der vorhergehenden Ansprüche, **dadurch gekennzeichnet, dass** vom Füllstoff mit einem Anteil von 70 Gew.-% bis 80 Gew.-%, bevorzugt 70 Gew.-% bis 77 Gew.-%, besonders bevorzugt 70 Gew.-% bis 75 Gew.-%, bezogen auf die Gesamtzusammensetzung, enthalten ist.

5. Feuchtigkeitshärtende Zusammensetzung gemäss einem der vorhergehenden Ansprüche, **dadurch gekennzeichnet, dass** der Füllstoff eine Kreide, bevorzugt eine unbeschichtete Kreide, besonders bevorzugt eine gemahlene, unbeschichtete Kreide enthält oder daraus besteht.

6. Feuchtigkeitshärtende Zusammensetzung gemäss einem der vorhergehenden Ansprüche, **dadurch gekennzeichnet, dass** die Zusammensetzung neben den genannten Inhaltsstoffen mindestens einen latenten Härter, und/oder mindestens ein Trocknungsmittel, und/oder mindestens einen Katalysator in einem Gesamtanteil von ≤ 5 Gew.-%, bezogen auf die Gesamtzusammensetzung, enthält.

7. Feuchtigkeitshärtende Zusammensetzung gemäss Anspruch 1, umfassend
a) 9 Gew.-% bis 16 Gew.-% von mindestens einem isocyanatfunktionellen Polymer,
b) 10 Gew.-% bis 12 Gew.-% Rapsölmethylester,
c) 70 Gew.-% bis 77 Gew.-% von mindestens einer Sorte Kreide, insbesondere einer unbeschichteten Kreide
d) 0 Gew.-% bis 2 Gew.-% mindestens eines latenten Härters, ins besondere eines Aldimins
e) 0 Gew.-% bis 0.5 Gew.-% mindestens eines Katalysators, und
f) 0 Gew.-% bis 2 Gew.-% mindestens eines Trocknungsmittels, bezogen auf die Gesamtzusammensetzung.

8. Feuchtigkeitshärtende Zusammensetzung gemäss einem der vorhergehenden Ansprüche, **dadurch gekennzeichnet, dass** die Zusammensetzung vor der Aushärtung nach Konditionierung während 24 h bei 23 °C eine Auspresskraft von ≤ 1600 N, bevorzugt ≤ 1000 N, bestimmt nach der in der Beschreibung angegebenen Methode, aufweist.

9. Verwendung einer feuchtigkeitshärtenden Zusammensetzung gemäss einem der Ansprüche 1 bis 8 als Klebstoff, Dichtstoff oder Beschichtung.

10. Verwendung gemäss Anspruch 9 als Parkettklebstoff.

11. Verwendung gemäss Anspruch 9 als Dichtstoff für Fugen, insbesondere Bewegungsfugen und/oder Anschlussfugen.

12. Ausgehärtete Zusammensetzung erhältlich aus einer Zusammensetzung gemäss einem der Ansprüche 1 bis 8 nach deren Härtung mit Wasser.

## Claims

1. Moisture-curing composition comprising
a) 5 wt% to 20 wt% of at least one isocyanate-functional polymer,
b) 7 wt% to 20 wt% of rapeseed oil methyl ester, and
c) 70 wt% to 88 wt% of at least one filler, based on the overall composition.

2. Moisture-curing composition according to Claim 1, **characterized in that** the isocyanate-functional polymer is included with a fraction of 7 wt% to 20 wt%, preferably 9 wt% to 18 wt%, more preferably 10 wt% to 16 wt%, based on the overall composition.

3. Moisture-curing composition according to either of the preceding claims, **characterized in that** rapeseed oil methyl ester is included with a fraction of 8 wt% to 18 wt%, preferably 9 wt% to 15 wt%, more preferably 10 wt% to 12 wt%, based on the overall composition.

4. Moisture-curing composition according to any of the preceding claims, **characterized in that** the filler is included with a fraction of 70 wt% to 80 wt%, preferably 70 wt% to 77 wt%, more preferably 70 wt% to 75 wt%, based on the overall composition.

5. Moisture-curing composition according to any of the preceding claims, **characterized in that** the filler comprises or consists of a chalk, preferably an uncoated chalk, more preferably a ground, uncoated chalk.

6. Moisture-curing composition according to any of the preceding claims, **characterized in that** besides the ingredients stated, the composition comprises at least one latent curing agent, and/or at least one drying agent, and/or at least one catalyst, in a total fraction of ≤ 5 wt%, based on the overall composition.

7. Moisture-curing composition according to Claim 1, comprising
a) 9 wt% to 16 wt% of at least one isocyanate-functional polymer,
b) 10 wt% to 12 wt% of rapeseed oil methyl ester,
c) 70 wt% to 77 wt% of at least one kind of chalk, more particularly an uncoated chalk,
d) 0 wt% to 2 wt% of at least one latent curing agent, more particularly an aldimine,
e) 0 wt% to 0.5 wt% of at least one catalyst, and
f) 0 wt% to 2 wt% of at least one drying agent, based on the overall composition.

8. Moisture-curing composition according to any of the preceding claims, **characterized in that** the composition before curing and after conditioning at 23°C for 24 h has an extrusion force of ≤ 1600 N, preferably ≤ 1000 N, determined by the method specified in the description.

9. Use of a moisture-curing composition according to any of Claims 1 to 8 as adhesive, sealant or coating.

10. Use according to Claim 9 as wood flooring adhesive.

11. Use according to Claim 9 as sealant for joints, more particularly movement joints and/or connecting joints.

12. Fully cured composition obtainable from a composition according to any of Claims 1 to 8 after curing thereof with water.

## Revendications

1. Composition durcissant sous l'effet de l'humidité, contenant
a) 5% en poids à 20% en poids d'au moins un polymère à fonctionnalité isocyanate,
b) 7% en poids à 20% en poids d'ester méthylique d'huile de colza et
c) 70 à 88% en poids d'au moins une charge,
par rapport à la composition totale.

2. Composition durcissant sous l'effet de l'humidité selon la revendication 1, **caractérisée en ce que** le polymère à fonctionnalité isocyanate est contenu en une proportion de 7% en poids à 20% en poids, de préférence de 9% en poids à 18% en poids, de manière particulièrement préférée de 10% en poids à 16% en poids, par rapport à la composition totale.

3. Composition durcissant sous l'effet de l'humidité selon l'une quelconque des revendications précédentes, **caractérisée en ce que** l'ester méthylique d'huile de colza est contenu en une proportion de 8% en poids à 18% en poids, de préférence de 9% en poids à 15% en poids, de manière particulièrement préférée de 10% en poids à 12% en poids, par rapport à la composition totale.

4. Composition durcissant sous l'effet de l'humidité selon l'une quelconque des revendications précédentes, **caractérisée en ce que** la charge est contenue en une proportion de 70% en poids à 80% en poids, de préférence de 70% en poids à 77% en poids, de manière particulièrement préférée de 70% en poids à 75% en poids, par rapport à la composition totale.

5. Composition durcissant sous l'effet de l'humidité selon l'une quelconque des revendications précédentes, **caractérisée en ce que** la charge est ou est constituée par une craie, de préférence une craie non revêtue, de manière particulièrement préférée une craie broyée non revêtue.

6. Composition durcissant sous l'effet de l'humidité selon l'une quelconque des revendications précédentes, **caractérisée en ce que** la composition contient, outre les constituants mentionnés, au moins un durcisseur latent et/ou au moins un dessiccateur et/ou au moins un catalyseur en une proportion totale ≤ 5% en poids, par rapport à la composition totale.

7. Composition durcissant sous l'effet de l'humidité selon la revendication 1, comprenant
a) 9% en poids à 16% en poids d'au moins un polymère à fonctionnalité isocyanate,
b) 10% en poids à 12% en poids d'ester méthylique d'huile de colza,
c) 70% en poids à 77% en poids d'au moins un type de craie, en particulier d'une craie non revêtue
d) 0% en poids à 2% en poids d'au moins un durcisseur latent, en particulier d'une aldimine
e) 0% en poids à 0,5% en poids d'au moins un catalyseur, et
f) 0% en poids à 2% en poids d'au moins un dessiccateur,
par rapport à la composition totale.

8. Composition durcissant sous l'effet de l'humidité selon l'une quelconque des revendications précédentes, **caractérisée en ce que** la composition présente, avant le durcissement, après conditionnement pendant 24 h à 23°C, une force d'exprimabilité ≤ 1600 N, de préférence ≤ 1000 N, déterminée selon le procédé indiqué dans la description.

9. Utilisation d'une composition durcissant sous l'effet de l'humidité selon l'une quelconque des revendications 1 à 8 comme adhésif, masse d'étanchéité ou revêtement.

10. Utilisation selon la revendication 9 comme colle pour parquet.

11. Utilisation selon la revendication 9 comme masse d'étanchéité pour joints, en particulier pour joints de dilatation et/ou joints de raccord.

12. Composition durcie pouvant être obtenue à partir d'une composition selon l'une quelconque des revendications 1 à 8 après son durcissement avec de l'eau.
